# EUROPÄISCHE PATENTANMELDUNG

(11) **EP 2 669 073 A1**
(43) Veröffentlichungstag der Anmeldung: **04.12.2013**
(21) Anmeldenummer: 12169841.9
(22) Anmeldetag: 29.05.2012
(51) Int. Cl.: B29C 65/48

(54) **Verfahren zur Herstellung von zumindest zweilagigen Schaumstoffplatten durch Verkleben**

(71) Anmelder: BASF SE, 67056 Ludwigshafen (DE)
(72) Erfinder: Scherzer, Dietrich, 67433 Neustadt (DE); Hahn, Klaus, 67281 Kirchheim (DE); Hahn, Christoph, 67435 Neustadt (DE); Licht, Ulrike, 68309 Mannheim (DE); Merkel, Peter, 67308 Zellertal (DE)
(74) Vertreter: Ellwanger, Arndt

(57) **Zusammenfassung**

Die vorliegende Erfindung betrifft ein Verfahren zur Herstellung von zumindest zweilagigen Schaumstoffplatten durch Verkleben von mindestens zwei dünneren Schaumstoffplatten zu der zumindest zweilagigen Schaumstoffplatte, dadurch gekennzeichnet, dass auf mindestens einer Oberfläche von mindestens einer dünneren Schaumstoffplatte ein Gemisch enthaltend mindestens einen Klebstoff und mindestens ein Flammschutzmittel aufgebracht wird, wobei in dem Gemisch
i) die Gesamtmenge an Flammschutzmittel ≥ 4 Gew.-% (bezogen auf die Gesamtmenge an Klebstoff) beträgt, oder
ii) die Gesamtmenge an Flammschutzmittel ≥ 2,5 Gew.-% beträgt, sofern das Flammschutzmittel als Gemisch mit mindestens 2,5 Gew.-% Graphit eingesetzt wird (Mengenangaben jeweils bezogen auf die Gesamtmenge an Klebstoff).

## Beschreibung

Die vorliegende Erfindung betrifft ein Verfahren zur Herstellung von zumindest zweilagigen Schaumstoffplatten durch Verkleben von mindestens zwei dünneren Schaumstoffplatten, wobei auf mindestens einer Oberfläche von mindestens einer dünneren Schaumstoffplatte ein Gemisch enthaltend mindestens einen Klebstoff und mindestens ein Flammschutzmittel aufgebracht wird. Weiterhin betrifft die vorliegende Erfindung die Schaumstoffplatten als solche, die zumindest zweilagig sind. Die Anzahl der Lagen der Schaumstoffplatte als solche ergibt sich aus der Anzahl der dünneren Schaumstoffplatten, die miteinander verklebt werden. Wenn beispielsweise drei dünnere Schaumstoffplatten miteinander verklebt werden, wird eine dreilagige Schaumstoffplatten als solche erhalten, im Fall von vier dünneren Schaumstoffplatten ergibt sich demzufolge eine vierlagige Schaumstoffplatte als solche.

EP-A 1 318 164 betrifft ein Verfahren zur Herstellung von dicken extrudierten Polystyrol-Schaumstoffplatten (XPS-Platten) durch Verbinden zweier oder mehrerer dünner Platten. Die dicken Platten werden erhalten, indem die dünnen Platten an den Flächen, an denen sie verbunden werden sollen, mit einem organischen Lösungsmittel für Polystyrol gleichmäßig benetzt werden. Dadurch wird die Schaumstoffoberfläche angelöst und die Platten können anschließend miteinander verpresst werden. Als Lösungsmittel eignen sich beispielsweise Kohlenwasserstoffe, Alkohole oder Ether, die einen Siedepunkt zwischen 50 und 250 °C aufweisen. Weiterhin können in dem Verfahren gemäß EP-A 1318 164 die Schäumhäute an den Hauptflächen der miteinander zu verbindenden Platten geschält werden, bevor sie mit dem Lösungsmittel benetzt werden.

EP-A 1 213 119 offenbart ein Verfahren zur Verbindung von mindestens zwei Ausgangsplatten aus thermoplastischem Kunststoffschaum zu einer neuen Platte, wobei die Ausgangsplatten an den Berührungsflächen extrusionshautlos sind und die Verbindung der Ausgangsplatten durch Quellschweißen erfolgt. Zum Quellschweißen werden organische Lösungsmittel eingesetzt, die einen Siedepunkt < 150°C aufweisen, beispielsweise Aceton oder Gemische von organischen Lösungsmitteln mit Wasser.

EP-A 1 566 400 offenbart Schaumstoffplatten mit einer Beschichtung auf mindestens einer Plattenoberfläche, wobei die Beschichtung einen Polymerfilm, der eine Glasübergangstemperatur im Bereich von -60 bis +40°C aufweist, enthält. Die Schaumstoffplatten können beispielsweise einen Partikelschaum aus Polystyrol oder Polyolefin sein. Der Polymerfilm wird auf den Schaumstoffplatten dadurch erzeugt, dass eine entsprechende Polymerdispersion auf die Schaumstoffplatten aufgetragen wird, die anschließend abgetrocknet gelassen wird. Die Polymerdispersion beziehungsweise der daraus als Beschichtung resultierende Polymerfilm enthält in der Regel ein amorphes, thermoplastisches Polymer, vorzugsweise ein Styrol enthaltene Polymere wie Styrol-Acrylate und Styrol-Butadien-Copolymere eingesetzt. Die Polymerdispersion kann darüber hinaus zahlreiche weitere Stoffe enthalten wie beispielsweise Füllstoffe, Flammschutzmittel oder Infrarot (IR)-absorbierende Feststoffe. Diese Schaumstoffplatten eignen sich zur Haftung von Mörtel- Beton- und Putzsystemen, insbesondere werden sie als Wärmedämmstoff im Bauwesen verwendet. EP-A 1 566 400 offenbart jedoch nicht, dass mehrere einzelne solcher Schaumstoffplatten zu einer mehrlagigen dickeren Schaumstoffplatte zusammengefügt werden können. Ebenso wenig ist darin offenbart, dass die verwendeten Polymerdispersionen Klebstoffe sind, die eine gewisse Mindestmenge an Flammschutzmittel enthalten müssen.

Extrudierte Kunststoffschaumplatten von großer Dicke werden in DE-A 101 063 341 offenbart. Mit dem daran beschriebenen Verfahren zu Verbindung von mindestens zwei Ausgangplatten aus Kunststoffschaum zu einer neuen Platte können Platten mit einer Mindestdicke von 70mm hergestellt werden. Vorzugsweise handelt es sich dabei um Flour-chlor-kohlenwasserstofffreien Polystyrol-Schaumplatten. In dem Verfahren werden die Ausgangsplatten, die an der Berührungsfläche extrusionshautlos sind, miteinander verbunden, indem ein diffusionsoffener Kleber oder mechanische Verbindungselemente verwendet werden. Das Verfahren kann alternativ auch so durchgeführt werden, dass kein teilflächiger Verbindung und stellenweise Verschweißung oder stellenweise Verklebung ein nicht diffusionsfähiger Kleber oder nur ein gering diffusionsfähiger Kleber verwendet werden. Als Polystyrol-Schaumplatten eignen sich insbesondere XPS-Platten. In DE-A 101 063 341 sind jedoch keine Angaben enthalten, dass in den verwendeten Klebstoffen, die auch Reaktionskleber und/oder Hot-Melt-Kleber umfassen können, weitere Komponenten wie Flammschutzmittel oder Absorber enthalten sein können.

Ein weiteres Verfahren zu Verbindung von mindestens zwei Ausgangsplatten aus Kunststoffschaumplatten zu einer neuen Platte, die vorzugsweise eine Polystyrol-Schaumstoffplatte mit einer Mindestdicke von 70mm ist, wird in EP-A 1 471 125 offenbart. In diesem Verfahren werden ebenfalls Ausgangsplatten verwendet, die zumindest an der Berührungsfläche extrusionshautlos sind, und es erfolgt eine Verbindung der Ausgangsplatten mit einem diffusionsoffenen Kleber, wobei ein Hot-Melt-Kleber und/oder Reaktionskleber verwendet werden. Der Kleber besteht aus Isocyanat und mindestens einer weiteren Reaktionsgruppe, die ein Harz ist, dass im schmelzflüssigen Zustand klebrig ist und der Klebeverbindung eine Frühfestigkeit gibt. Das Isocyanat und das Harz reagieren dabei zu Polyurethan, wodurch die Klebewirkung mit einer Endfestigkeit erzielt wird.

Thermische Dämmstoffe aus XPS-Kompositmaterialien, die dreilagig sind, werden in WO 2012/016991 beschrieben. Die Dreilagigkeit der Kompositmaterialien ergibt sich dadurch, dass eine untere, eine zentrale und eine obere XPS-Platte zu dem XPS-Kompositmaterial vereinigt werden, wobei jede nach außen gerichtete Seite dieses XPS-Kompositmaterials eine Extrusionshaut umfasst. Während die Kontaktseiten der zentralen XPS-Platte ebenfalls eine Extrusionshaut aufweisen, wird diese bei den entsprechenden Kontaktseiten der oberen sowie unteren XPS-Platte entfernt. Die einzelnen XPS-Platten werden zum XPS-Kompositmaterial durch thermisches Verschweißen an den Kontaktflächen zusammengefügt. WO 2012/016991 enthält jedoch keine Informationen darüber, ob alternativ oder zusätzlich zum Verschweißen Klebstoffe gegebenenfalls in Verbindung mit Flammschutzmittel verwendet werden können.

WO 2009/047487 offenbart mehrschichtige Kompositmaterialien, die eine erste Schicht aus einem geschlossen porigen Schaum eines Thermoplasten und eine zweite Schicht aus einem Faserverstärkten Harz, die auf der Oberfläche der ersten Schicht aufgebracht ist, umfassen. Der geschlossenzellige Schaum hat eine mittlere Zellgröße von weniger als 100 µm, vorzugsweise handele es sich dabei um eine Mischung aus Polystyrol und Polyphenylenoxid (PS/PPO). Diese schichtförmigen Kompositmaterialien eignen sich zur Herstellen von größeren Strukturen beispielsweise für Rotorblätter von Windkraftanlagen.

Die der vorliegenden Erfindung zugrunde liegende Aufgabe besteht in der Bereitstellung von neuen zwei- oder mehrlagigen Schaumstoffplatten als solchen bzw. einem entsprechenden Verfahren zur Herstellung von solchen zumindest zweilagigen Schaumstoffplatten.

Gelöst wird für die Aufgabe durch ein Verfahren zur Herstellung von zumindest zweilagigen Schaumstoffplatten durch Verkleben von mindestens zwei dünneren Schaumstoffplatten zu der zumindest zweilagigen Schaumstoffplatte, **dadurch gekennzeichnet, dass** auf mindestens einer Oberfläche von mindestens einer dünneren Schaumstoffplatte ein Gemisch enthaltend mindestens einen Klebstoff und mindestens ein Flammschutzmittel aufgebracht wird, wobei in dem Gemisch
i) die Gesamtmenge an Flammschutzmittel ≥ 4 Gew.-% (bezogen auf die Gesamtmenge an Klebstoff) beträgt, oder
ii) die Gesamtmenge an Flammschutzmittel ≥ 2,5 Gew.-% beträgt, sofern das Flammschutzmittel als Gemisch mit mindestens 2,5 Gew.-% Graphit eingesetzt wird (Mengenangaben jeweils bezogen auf die Gesamtmenge an Klebstoff).

Die mit dem erfindungsgemäßen Verfahren hergestellten zumindest zweilagigen Schaumstoffplatten zeichnen sich dadurch aus, dass die entsprechende Anzahl an dünneren Schaumstoffplatten auf sehr stabile Weise zu den zumindest zweilagigen Schaumstoffplatten verklebt beziehungsweise zusammengefügt werden können und dass sie insbesondere verbesserte Eigenschaften hinsichtlich ihres Flammverhaltens aufweisen. Die Verbesserung des Flammverhaltens geht dabei nicht auf Kosten der Klebewirkung

Eine Verbesserung des Flammverhaltens in Kombination mit optimierter Klebewirkung wird insbesondere bei Flammschutzmitteln wie DMPP (Dimethylpropanphosphonat) beobachtet, weil wahrscheinlich durch das niedermolekulare Flammschutzmittel die Oberfläche des polymeren Schaums angelöst wird. Dieser Effekt wird auch mit anderen niedermolekularen Flammschutzmittel wie beispielsweise DMMP (Dimethymethylphosphonat), TCEP (Tris(chlorethyl)phosphat),TCPP (Tris(chlor-propyl)phosphat), TDCPP (Tris(dichlorisopropyl)phosphat), TPP (Triphenylphosphat), TEHP (Tris-(2-ethylhexyl)phosphat), TKP (Trikresylphosphat, TCEP (Trichlorpropylphosphat) oder DPKP (Diphenylkresylphosphat) beobachtet. Geeignete pulverförmige Flammschutzmittel, die mit dem Klebstoff verträglich sind und als "Füllstoffe" fungieren können ebenfalls die Klebwirkung verstärken. Beispiels dafür sind Aluminium- und Magnesiumhydroxid, Melamin, Melamincyanurat und Melaminpolyphosphat.

Die zumindest zweilagigen Schaumstoffplatten als solche weisen eine hohe Zugfestigkeit auf, vorzugsweise eine Zugfestigkeit von > 0,15 N/mm² und/oder sie bestehen Brandteste nach den ISO-Normen B1 und/oder B2. Das verbesserte Flammverhalten ist insbesondere auf das spezielle Verhältnis von Klebstoff zu Flammschutzmittel in dem Gemisch zurückzuführen, das auf mindestens eine Oberfläche von mindestens einer dünneren Schaumstoffplatte aufgebracht wird.

Das stabile Zusammenfügen der einzelnen dünneren Schaumstoffplatten erfolgt erfindungsgemäß durch Verkleben unter Verwendung eines Gemisches enthaltend mindestens einen Klebstoff und mindestens ein Flammschutzmittel. Es ist somit nicht erforderlich, dass die einzelnen dünneren Schaumstoffplatten unter Zuhilfenahme eines Lösungsmittels (Quellschweißen) oder durch thermisches Verschweißen zusammengefügt bzw. verklebt werden. Im Rahmen der vorliegenden Erfindung kann jedoch zusätzlich zur Verwendung von Klebstoffen auch ein thermischer Verschweißungsschritt (durch Bestrahlen mit elektromagnetischer Strahlung und unter Verwendung eines entsprechenden Absorbers von elektromagnetischer Strahlung) durchgeführt werden, um den Zusammenhalt bzw. die Klebewirkung der einzelnen dünneren Schaumstoffplatten weiter zu erhöhen.

Sofern der Absorber von elektromagnetischer Strahlung zusammen mit dem Gemisch enthaltend mindestens einen Klebstoff und mindestens ein Flammschutzmittel, insbesondere in Form einer wässrigen Klebstoffdispersion, auf die dünneren Schaumstoffplatten aufgetragen wird, ist infolge der Anwesenheit des Absorbers bzw. gegebenenfalls der Durchführung des thermischen Verschweißens ein schnelleres Abtrocknen des Klebers festzustellen, was ein weiterer Vorteil darstellt. Infolge der Anwesenheit des Absorbers kann der Klebstoff viel schneller Energie aufnehmen, was zu einem schnelleren Abtrocknen und gegebenenfalls auch besseren Klebeverhalten führt.

Aufgrund der Anwesenheit des Absorbers für elektromagnetische Strahlung wird beim (zusätzlich zum Verkleben) durchzuführenden thermischen Verschweißen zudem bewirkt, dass nur die mit dem Absorber versehene Oberfläche der entsprechenden dünneren Schaumstoffplatte selektiv erhitzt wird. Demzufolge werden beim Verschweißen keine Löcher in den Plattenkörper eingebrannt bzw. dies erfolgt nur in einem äußerst geringen Umfang. Dies hat zur Folge, dass die entsprechenden dünneren Schaumstoffplatten beim thermischen Verschweißen nicht verzogen werden, sodass ein exaktes Anhaften der einzelnen dünneren thermoplastischen Schaumstoffplatten zu beobachten ist, was sich wiederum positiv auf die Festigkeit der zumindest zweilagigen thermoplastischen Schaumstoffplatten auswirkt.

Ein besonders festes Anhaften der miteinander zu verklebenden dünneren Schaumstoffplatten wird im Rahmen des erfindungsgemäßen Verfahrens dann festgestellt, sofern mindestens eine der zu verklebenden Oberflächen der dünneren Schaumstoffplatten schaumhautfrei ist. Insbesondere ist dies festzustellen, wenn pro zu verklebenden Plattenpaar die jeweils zu verklebenden Oberfläche der beiden dünneren Schaumstoffplatten schaumhautfrei ist. Durch das Entfernen der Schaumhaut wird eine Plattenoberfläche erzeugt, die das Gemisch enthaltend mindestens einen Klebstoff und mindestens ein Flammschutzmittel und gegebenenfalls einen Absorber von elektromagnetischer Strahlung besser aufnehmen kann und folglich auch besser zu verkleben ist im Vergleich zu Schaumstoffplatten, bei denen die Schaumhaut (Extrusionshaut) nicht entfernt worden ist. Schaumstoffplatten mit Schaumhaut weisen eine viel glattere Oberfläche auf, die in aller Regel jedoch nicht planparallel mit der Oberfläche der zu verklebenden zweiten Platte ist. Demzufolge wird häufig ein Verziehen der Platten beim Verklebungsvorgang beobachtet, was unter Umständen zu einem reduzierten Zusammenhalt/reduzierten Festigkeit des zumindest zweilagigen Schaumstoffplattens nach dem Verkleben führt.

Nachfolgend werden die erfindungsgemäß zumindest zweilagigen Schaumstoffplatten als solche sowie das erfindungsgemäße Herstellungsverfahren dieser Schaumstoffplatten durch Verkleben näher definiert.

Die erfindungsgemäße Schaumstoffplatte ist zumindest zweilagig, sie kann also genau zwei Lagen aufweisen oder dreilagig, vierlagig, fünflagig oder noch höher lagig sein. Wie vorstehend bereits ausgeführt, ergibt sich die Anzahl der Lagen der Schaumstoffplatte als solche aus der Anzahl der dünneren Schaumstoffplatten, die miteinander verklebt werden. Im Falle einer zweilagigen Schaumstoffplatte als solche werden also zwei dünnere Schaumstoffplatten miteinander verklebt. Bei einer drei-oder vierlagigen Schaumstoffplatten als solcher werden somit drei bzw. vier dünnere Schaumstoffplatten miteinander verklebt. Sofern noch höher lagige Schaumstoffplatten als solche hergestellt werden soll, beispielsweise eine zehnlagige Schaumstoffplatte, müssen demzufolge die der Anzahl der Lagen entsprechende Anzahl an dünneren Schaumstoffplatten, beispielsweise zehn dünnere Schaumstoffplatten, miteinander verklebt werden. Vorzugsweise ist die erfindungsgemäße Schaumstoffplatte zweilagig, dreilagig oder vierlagig, insbesondere ist die erfindungsgemäße Schaumstoffplatte zweilagig.

Die zum Verkleben verwendeten dünneren Schaumstoffplatten entsprechen hinsichtlich ihrer chemischer Zusammensetzung den im Rahmen des erfindungsgemäße Verfahrens hergestellten zumindest zweilagigen Schaumstoffplatten als solchen (ohne Berücksichtigung der im Rahmen des Verklebungsvorganges auf die Oberflächen aufgebrachten Klebstoffen und Flammschutzmittel oder den optionalen Bindemitteln, Absorber von elektromagnetischer Strahlung etc.). Die jeweils miteinander zu verklebenden dünneren Schaumstoffplatten weisen vorzugsweise dieselbe Dimensionen und/oder dieselbe chemische Zusammensetzung auf. Gegebenenfalls können aber auch Schaumstoffplatten mit unterschiedlichen Dimensionen und/oder unterschiedlicher chemischer Zusammensetzung miteinander verklebt werden. Werden beispielsweise drei dünnere Schaumstoffplatten miteinander verklebt, die allesamt die gleiche Dimensionierung aufweisen und (beispielsweise) ein extrudierter Polystyrol-Schaumstoff (XPS-Schaumstoff) sind, wird dadurch ein dreilagiger extrudierter Polystyrol-Schaumstoff (XPS) erhalten.

Die Dimensionierung der miteinander zu verklebenden dünneren Schaumstoffplatten ist beliebig. Hinsichtlich ihrer Länge und Breite können sie Maße im Zentimeterbereich bis hin zu mehreren Metern aufweisen. Hinsichtlich der dritten Dimension (Dicke) sind theoretisch ebenfalls beliebige Maße denkbar, in der Praxis weisen die dünneren Schaumstoffplatten eine Dicke von 10 bis 150 mm auf. Die Dicke der im erfindungsgemäßen Verfahren hergestellten zumindest zweilagigen Schaumstoffplatten ergibt sich somit aus der Gesamt-Dicke der insgesamt eingesetzten dünneren Schaumstoffplatten. Insbesondere wenn im Rahmen des Herstellungsverfahrens ein Verpressungsschritt durchgeführt wird, ist die Dicke der zumindest zweilagigen Schaumstoffplatten als solche geringer als die Summe der jeweiligen Dicken der eingesetzten dünneren Schaumstoffplatten.

Die zum Verkleben eingesetzten dünneren Schaumstoffplatten als solche sind dem Fachmann prinzipiell bekannt. Geeignete Schaumstoffplatten sind beispielsweise in EP-A 1 566 490 oder in Form von Blends in WO 2009/047487 offenbart.

Vorzugsweise sind die dünneren Schaumstoffplatten ein Partikelschaumstoff oder ein Extrusionsschaumstoff. Weiterhin ist es bevorzugt, dass die dünneren Schaumstoffplatten eine Dichte < 200 g/l aufweisen. Weiterhin ist es bevorzugt, dass die dünneren Schaumstoffplatten dünnere thermoplastische Schaumstoffplatten sind. Dies gilt insbesondere für den weiter unten beschriebenen Fall, dass zusätzlich zum Verkleben ein thermisches verschweißen durchgeführt wird und/oder dass die getrockneten dünneren Schaumstoffplatten mit elektromagnetischer Strahlung aktiviert werden.

Mehr bevorzugt sind die dünneren Schaumstoffplatten ein Extrusionsschaumstoff, vorzugsweise ein thermoplastischer Extrusionsschaumstoff. Der Extrusionsschaumstoff ist vorzugsweise ein Polystyrol oder aus Styrol hergestelltes Copolymer. Gegebenenfalls können auch Gemische aus solchen Polymeren eingesetzt werden. Besonders bevorzugt ist der Extrusionsschaumstoff extrudiertes Polystyrol (XPS), der beispielsweise unter der Bezeichnung Styrodur® von der BASF SE kommerziell erhältlich ist.

Sofern der Extrusionsschaumstoff auf Basis von (mindestens) einem aus Styrol hergestellten Copolymer ist (auch als Styrolcopolymerisate bezeichnet), bedeutet dies, dass zur Herstellung dieses Copolymeren neben dem Monomeren Styrol mindestens ein weiteres Monomer erforderlich ist. Vorzugsweise wird dieses Copolymer aus Styrol und einem weiteren Monomeren hergestellt. Als Comonomere von Styrol eignen sich prinzipiell alle mit Styrol polymerisierbaren Monomere. Vorzugsweise sind mindestens 50 Gew.-% Styrol in diesem Copolymer einpolymerisiert.

Vorzugsweise weist ein aus Styrol hergestelltes Copolymer als Comonomer zu Styrol ein Monomer auf, das ausgewählt ist aus α-Methylstyrol, kernhalogenierten Styrolen, kernalkylierten Styrolen, Acrylnitril, Acrylsäureester, Methacrylsäureester, N-Vinylverbindungen, Maleinsäureanhydrid, Butadien, Divinylbenzol oder Butandioldiacrylat. Acrylsäureester sowie Methacrylsäureester sind vorzugsweise erhältlich aus Alkoholen mit 1 bis 8 Kohlenstoffatomen. Eine geeignete N-Vinylverbindung ist beispielsweise Vinylcarbazol. Bevorzugte aus Styrol hergestellte Copolymere sind Styrol-Acrylnitril-Copolymere (SAN) oder Acrylnitril-Butadien-Styrol-Copolymere (ABS).

Im erfindungsgemäßen Verfahren wird auf mindestens einer Oberfläche von mindestens einer dünneren Schaumstoffplatte ein Gemisch enthaltend mindestens einen Klebstoff und mindestens ein Flammschutzmittel aufgebracht wird, wobei in dem Gemisch
i) die Gesamtmenge an Flammschutzmittel ≥ 4 Gew.-% (bezogen auf die Gesamtmenge an Klebstoff) beträgt, oder
ii) die Gesamtmenge an Flammschutzmittel ≥ 2,5 Gew.-% beträgt, sofern das Flammschutzmittel als Gemisch mit mindestens 2,5 Gew.-% Graphit eingesetzt wird (Mengenangaben jeweils bezogen auf die Gesamtmenge an Klebstoff).

Vorzugsweise wird pro zu verklebenden Plattenpaar auf nur eine zu verklebende Oberfläche der dünneren Schaumstoffplatten mindestens ein (vorstehend beschriebenes) Gemisch enthaltend mindestens einen Klebstoff und mindestens ein Flammschutzmittel aufgetragen. Verfahren zum Auftragen eines solchen Gemisches sind dem Fachmann bekannt, beispielsweise kann das Gemisch großflächig auf die entsprechende Oberfläche der dünneren Schaumstoffplatte aufgetragen werden. Das Auftragen des Klebstoffes kann nach den üblichen Verfahren erfolgen, z. B. durch Pinseln, Sprühen, Walzen, Rakeln oder Drucken. Die aufgebrachte Klebstoffmenge liegt zwischen 10 g/m² bis 400 g/m² (fest), bevorzugt sind 20 g/m² bis 200 g/m², besonders bevorzugt sind 50 g/m² bis 150 g/m².

Als Klebstoffe können prinzipiell alle dem Fachmann bekannten Klebstoffe eingesetzt werden, vorzugsweise in Form von Dispersionen.

Grundsätzlich sind als Klebstoffe zur Verklebung der dünnen Schaumstoffplatten, insbesondere von extrudiertem Polystyrol, lösemittelfreie und wässrige Klebstoffe geeignet. Lösemittelhaltige Klebstoffe sind aus Gründen des Arbeitsschutzes und Explosionsschutzes weniger gut geeignet, können aber auch verwendet werden. Lösemittel können zusätzlich den Polystyrolschaum angreifen.

Bei den lösemittelfreien Klebstoffen sind 100%-ige reaktive Klebstoffe geeignet, besonders ein- und zweikomponentige Polyurethanklebstoffe. Reaktive Cyanacrylatklebstoffe ("Sekundenkleber") sind hingegen weniger gut geeignet, da sie in ihrer Abbindezeit schlechter kontrolliert werden können und sich nur bedingt zum Verkleben von großen Flächen eignen.

Auch zweikomponentige Acrylat-Struktur-Klebstoffe sind möglich, aber wegen der problematischen Handhabung weniger bevorzugt. Einkomponentige, feuchtigkeitshärtende Acrylatmassen wie sie in der EP-A 1879974 beschrieben sind, können ebenfalls eingesetzt werden, sind aber wegen der langen Härtungszeit weniger bevorzugt. Zweikomponentige Epoxidklebstoffe sind einsetzbar, ihre Wasserdampfdurchlässigkeit ist aber schlechter als bei weniger dicht vernetzten Klebstoffen.

Schmelzklebstoffe (Schmelzkleber) sind geeignet. Vorzugsweise wird bei Schmelzklebstoffen der Auftrag unter so schonenden Bedingungen durchgeführt, dass der Schaum nicht zu hohen Temperaturen ausgesetzt wird. Bevorzugt sind Polyurethanschmelzklebstoffe (PU-Schmelzklebstoffe). Besonders bevorzugte Schmelzklebstoffe sind nachvernetzende PU-Schmelzklebstoffe.

Bei PU-Schmelzklebstoffen, aber auch bei anderen Klebstoffen, kann gegebenenfalls zusätzlich ein Härter verwendet werden, was sich vorteilhaft auf die Wärmestandfestigkeit und/oder die Hydrolysebeständigkeit auswirken kann.

Bei wässrigen Klebstoffen sind Kontaktklebstoffe und Kaschierklebstoffe besonders geeignet.

Reine Haftklebstoffe können ebenfalls eingesetzt werden. Besser geeignet sind sie, wenn ihnen ein Vernetzer zugesetzt wird, der nach der Verklebung eine Verfestigung des Materials bewirkt.

Im Rahmen der vorliegenden Erfindung ist der Klebstoff vorzugsweise ein Polyurethanklebstoff und/oder ein Schmelzklebstoff, insbesondere ein Polyurethanschmelzklebstoff.

Vorzugsweise wird der Klebstoff im Rahmen der vorliegenden Erfindung als Dispersion eingesetzt. Sofern Dispersionen eingesetzt werden, sind Dispersionen auf Basis Polychloropren, Polyacrylat, Styrol/Acrylat, Polyurethan, Styrol/Butadien möglich.
Bei Kontaktklebstoffen sind Dispersionen auf Basis Polychloropren, Polyacrylat, Styrol/Acrylat und Polyurethan möglich. Besonders bevorzugt sind die Dispersionen von Kaschierklebstoff überwiegend auf Basis von Polyurethanen und Polyacrylaten.

Bei wässrigen Kaschierklebstoffen ist nach dem Auftrag des Klebstoffs in der Regel eine Trocknung und eine thermische Aktivierung notwendig. Besonders bevorzugt sind die Dispersionen von Kaschierkleboff auf Basis von Polyurethanen und Polyacrylaten. Bevorzugt wird der Klebstoff auf beide Seiten aufgetragen und getrocknet und dann aktiviert und verpresst.

Wässrige Klebstoffe, die erst nach dem Fügen physikalisch trocknen, sind einsetzbar, benötigen jedoch eine längere Zeit bis zum Erreichen der endgültigen Festigkeit. Solche Systeme können auch als dünnflüssige oder verdickte ungefüllte Leime oder gefüllt mit Füllstoffen pastenartig eingesetzt werden.

Flammschutzmittel als solche sind dem Fachmann bekannt. Geeignete Flammschutzmittel sind beispielsweise in Jürgen Troitzsch "Plastics Flammability Handbook" (3. Aufl., Hanser Verlag) beschrieben. Bevorzugte Flammschutzmittel im Rahmen der vorliegenden Erfindung sind ausgewählt aus einem Phosphat, einem Phosphit, einem Phosphonat, einem Polyphosphonat, Melamin, einem Metalloxidhydrat, insbesondere einem Aluminiumoxidhydrat, oder einer halogenierten organischen Verbindung.

Bevorzugte Phosphate und Phosphonate sind ausgewählt aus DMMP (Dimethymethylphosphonat), DMPP (Dimethylpropylphosphonat), TCEP (Tris(chlorethyl)phosphat), TCPP (Tris(chlorpropyl)phosphat), TDCPP (Tris(dichlorisopropyl)phosphat), TPP (Triphenylphosphat), TEHP (Tris-(2-ethylhexyl)phosphat), TKP (Trikresylphosphat) oder TCEP (Trichlorpropylphosphat).

Ein besonders bevorzugtes Flammschutzmittel ist Dimethylpropylphosphonat (DMPP), das beispielsweise kommerziell erhältlich ist unter der Bezeichnung Levagard DMPP von der Firma Lanxess.

In dem Gemisch enthaltend mindestens einen Klebstoff und mindestens ein Flammschutzmittel beträgt (gemäß der ersten Variante der vorliegende Erfindung) die Gesamtmenge an Flammschutzmittel ≥ 4 Gew.-% (bezogen auf die Gesamtmenge an Klebstoff), vorzugsweise beträgt die Gesamtmenge an Flammschutzmittel 4,5 bis 15 Gew.-% (bezogen auf die Gesamtmenge an Klebstoff), insbesondere beträgt die Gesamtmenge an Flammschutzmittel 5 bis 10 Gew.-% (bezogen auf die Gesamtmenge an Klebstoff).

Erfindungsgemäß kann die Gesamtmenge an Flammschutzmittel (zweite Variante) auch etwas geringer als ≥ 4 Gew.-% (bezogen auf die Gesamtmenge an Klebstoff) ausfallen, sofern das Flammschutzmittel als Gemisch mit Graphit, vorzugsweise mit Blähgraphit, eingesetzt wird. Gemäß der zweiten Variante beträgt die Gesamtmenge an Flammschutzmittel ≥ 2,5 Gew.-%, sofern das Flammschutzmittel als Gemisch mit mindestens 2,5 Gew.-% Graphit eingesetzt wird (Mengenangaben jeweils bezogen auf die Gesamtmenge an Klebstoff). Gemäß der zweiten Variante beträgt die Gesamtmenge an Flammschutzmittel vorzugsweise ≥ 3,5 Gew.-% (bezogen auf die Gesamtmenge an Klebstoff), mehr bevorzugt beträgt die Gesamtmenge an Flammschutzmittel 4,5 bis 15 Gew.-% (bezogen auf die Gesamtmenge an Klebstoff), insbesondere beträgt die Gesamtmenge an Flammschutzmittel 5 bis 10 Gew.-% (bezogen auf die Gesamtmenge an Klebstoff). Die Gesamtmenge an Graphit, vorzugsweise an Blähgraphit, beträgt vorzugsweise ≥ 4 Gew.-% (bezogen auf die Gesamtmenge an Klebstoff), insbesondere beträgt die Gesamtmenge an Graphit 5 bis 10 Gew.-% (bezogen auf die Gesamtmenge an Klebstoff).

Nachfolgend werden erfindungsgemäße Beispiele für Kombinationen von Flammschutzmitteln oder Graphit mit Klebstoff aufgeführt.

Werden wässrige Klebstoffe eingesetzt, enthalten sie bevorzugt ein als wässrige Formulierung zuzugebendes Flammschutzmittel, ein kommerziell erhältliches Beispiel hierfür ist Exolit RP 614 von Clariant SE.

Nichtwasserlösliche Flammschutzmittel oder Graphit werden vorzugsweise als feines Pulver mit der Hilfe von Pigmentdispergatoren und Tensiden zugemischt, Beispiele sind Melamin, Melamincyanurat, Melamin(poly)-phosphat, Melaminphenylphosphonat, Blähgraphit, Aluminiumhydroxid. Finden gefüllte Dispersionen Anwendung, kann ein Teil der Füllstoffe durch ein festes, nichtlösliches Flammschutzmittel ersetzt werden.

Da Polyurethandispersionen bevorzugt Sekundärdispersionen sind, ist es möglich, Flammschutzmittel auch schon während der Herstellung in die organische Phase zu geben, dazu eignen sich besonders organisch lösliche Typen wie DMPP, Triphenylphosphat, sogar Peroxide wie Dicumylperoxid können verwendet werden. Dieses Vorgehen ermöglicht eine besonders gute Verteilung der Flammschutzmittel in den Polymerpartikeln. Auch können halogenierte Polyole als Aufbaukomponenten in wässrigen wie auch reaktiven Polyurethanklebstoffen mitverwendet werden.

Alternativ sind die Flammschutzmittel flüssig und in Wasser löslich oder wasserdispergierbar, besonders geeignet ist Dimethylpropylphosphonat (DMPP).

Bei nichtwässrigen Klebstoffen sind organisch lösliche Flammschutzmittel wie DMPP bevorzugt, andere geeignete Substanzen sind in der WO 2003/051954 besonders für Polyurethanklebstoffe beschrieben.

Nichtwasserlösliche Flammschutzmittel oder Graphit werden vorzugsweise als feines Pulver zugebenen, Beispiele sind Blähgraphit, kommerziell erhältlich als Melapur MC® und Melapur MP® von BASF. Pulverförmige Flammschutzmittel können auch oberflächenmodifiziert sein, so dass eine gute Verteilung möglich ist.

Wie vorstehend bereits erwähnt, können in dem Gemisch enthaltend mindestens einen Klebstoff, mindestens ein Flammschutzmittel und gegebenenfalls Graphit auch weitere Stoffe mit anderen Verwendungseigenschaften enthalten sein, die gemeinsam mit dem Gemisch auf die zu verklebende Oberfläche der entsprechenden dünneren Schaumstoffplatten aufgetragen werden. Geeignete weitere Stoffe können beispielsweise Absorber von elektromagnetischer Strahlung und/oder Bindemittel sowie gegebenenfalls Lösungsmittel sein. Absorber von elektromagnetischer Strahlung, Bindemittel sowie Lösungsmittel als solche sind dem Fachmann bekannt.

Geeignete Absorber sind beispielsweise in WO 2009/071499 auf den Seiten 9 bis 11 beschrieben. Im Rahmen der vorliegenden Erfindung wird ein Absorber von elektromagnetischer Strahlung in der Regel dann eingesetzt, wenn zusätzlich zum Verkleben, vorzugsweise zeitgleich oder im Anschluss, ein thermischer Verschweißungsschritt durchgeführt wird. Gegebenenfalls kann auch mindestens ein Absorber von elektromagnetischer Strahlung zusätzlich auf mindestens eine dünnere Schaumstoffplatte aufgetragen werden, ohne dass ein thermischer Verschweißungsschritt durchgeführt wird. Vorzugsweise wird im Rahmen der vorliegenden Erfindung der Absorber von elektromagnetischer Strahlung in Abhängigkeit von der zum thermischen Verschweißen verwendeten elektromagnetischen Strahlung ausgewählt. Erfolgt beispielsweise das thermische Verschweißen unter Verwendung von Mikrowellen-Strahlen, wird vorzugsweise ein Absorber von elektromagnetischer Strahlung ausgewählt, der über eine gute Absorptionsfähigkeit im Wellenlängenbereich von Mikrowellen verfügt.

Geeignete Absorber sind beispielsweise organische IR-Absorber, organische Mikrowellen-Absorber, anorganische IR-Absorber oder anorganische Mikrowellen-Absorber.

Unter IR-Absorber ist im Rahmen dieser Anmeldung eine Verbindung zu verstehen, die aufgebracht in einer Schichtdicke von 50 µm bei mindestens einer Wellenlänge von Strahlung des Wellenlängenbereichs von 700 nm bis 1 eine Absorption ≥90 % zeigt. Bevorzugt ist der Wellenlängenbereich von >700 nm bis 2000 nm, sowie die Wellenlängen 9,6 µm und 10,6 µm.

Unter Mikrowellen-Absorber ist im Rahmen dieser Anmeldung eine Verbindung zu verstehen, die Mikrowellen des Wellenlängenbereichs von > 1 mm bis 1 m absorbiert. Besonders bevorzugt werden die technisch relevanten Frequenzen von 2,45 Ghz, 433-444 MHz und 902-928 MHz.

Vorzugsweise ist der Absorber von elektromagnetischer Strahlung ein Infrarot (IR)-Absorber und/oder Mikrowellen Absorber, insbesondere Graphit oder Ruß. Weiterhin ist es bevorzugt, dass die elektromagnetische Strahlung IR-Strahlen und/oder Mikrowellen-Strahlen sind.

Die Durchführung des thermischen Verschweißens als solchen ist dem Fachmann bekannt. Der Fachmann kennt weiterhin die hierfür erforderlichen Geräte zur Erzeugung der geeigneten elektromagnetischen Strahlung. Beispielsweise kann eine beschichtete Platte im Sekunden- bis Minutenbereich in einem Mikrowellenofen oder mit einem IR-Strahler bestrahlt werden. Erfindungsgemäß wird thermisches Verschweißen nur dann durchgeführt, sofern auf mindestens eine dünnere Schaumstoffplatte zuvor mindestens ein Absorber von elektromagnetischer Strahlung aufgetragen wurde. Vorzugsweise erfolgt das thermische Verschweißen nach dem Zusammenfügen der dünneren Schaumstoffplatten an den zu verklebenden Oberflächen oder im Anschluss an ein Verpressen der zusammengefügten dünneren Schaumstoffplatten.

Sofern im Rahmen der vorliegenden Erfindung eine mit dem vorgenannten Gemisch, enthaltend mindestens ein Klebstoff und mindestens ein Flammschutzmittel, versehene dünnere Schaumstoffplatte elektromagnetischer Strahlung ausgesetzt wird, ohne dass auf die entsprechende dünnere Schaumstoffplatte auch ein Absorber von elektromagnetischer Strahlung aufgebracht wurde, wird ein solcher Vorgang im Rahmen der vorliegenden Erfindung nicht als thermisches Verschweißen, sondern als Aktivieren der besagten dünneren Schaumstoffplatte bezeichnet. In der Regel erfolgt das Aktivieren, nachdem das Gemisch enthaltend mindestens ein Klebstoff und mindestens ein Flammschutzmittel auf mindestens eine zu verklebende Oberfläche der dünnen Schaumstoffplatten aufgebracht worden ist, vorzugsweise im Anschluss an einen Trocknungsschritt der mit dem vorstehenden Gemisch versehenen dünnen Schaumstoffplatten. Gegebenenfalls kann der Aktivierungsschritt auch nach dem Zusammenfügen der dünneren Schaumstoffplatten an den zu verklebenden Oberflächen oder im Anschluss an ein Verpressen der zusammengefügten dünneren Schaumstoffplatten erfolgen.

Weiterhin können in dem Gemisch enthaltend mindestens einen Klebstoff und mindestens ein Flammschutzmittel auch Bindemittel enthalten sein, vorzugsweise dann, sofern in dem Gemisch zusätzlich mindestens ein Absorber von elektromagnetischer Strahlung enthalten ist.

Geeignete Bindemittel im Rahmen der vorliegenden Erfindung sind ausgewählt aus Polyacrylaten und Copolymeren davon, Polystyrol und Copolymeren davon, Ethylen/Acrylat-Copolymeren, Ethlyen/Vinylacetat-Copolymeren, Polyurethanen und Polyurethan/Acrylat-Hybriden. Bevorzugte Copolymere von Polystyrol sind Styrol/Butadien-Copolymere.

Bevorzugte Bindemittel sind ausgewählt aus wässrigen Dispersionen oder Lösungen von Polyacrylaten und Copolymeren davon, Polystyrol und Copolymeren davon, Ethylen/Acrylat-Copolymeren, Ethlyen/Vinylacetat-Copolymeren, Polyurethanen und Polyurethan/Acrylat-Hybriden. Bevorzugte Copolymere von Polystyrol sind Styrol/Butadien-Copolymere.

Als Bindemittel besonders bevorzugt sind Dispersionen mit hohem Anteil an Polystyrol oder Copolymer davon, insbesondere mit einem hohen Anteil an Polystyrol. Diese Dispersionen werden vorzugsweise verwendet, wenn im erfindungsgemäßen Verfahren die dünneren thermoplastischen Schaumstoffplatten (Ausgangsplatten) ebenfalls Polystyrol oder Copolymere davon enthalten, weil dann die Eigenschaften der zumindest zweilgqigen thermoplastischen Schaumstoffplatten (Verbundplatten) aufgrund der Verwendung des besagten Bindemittels noch weniger von den Ausgangsplatten abweichen.

In einer bevorzugten Ausführungsform der vorliegenden Erfindung wird ein Gemisch enthaltend mindestens einen Klebstoff und mindestens ein Flammschutzmittel auf mindestens eine Oberfläche von mindestens einer dünneren Schaumstoffplatte aufgetragen wird, wobei die Oberfläche schäumhautfrei ist. Der Vollständigkeit-halber wird darauf hingewiesen, dass bei Verwendung eines Extrusionsschaumstoffes die entsprechende Oberfläche auch als extrusionshautfrei anstelle von schäumhautfrei bezeichnet wird.

In einer weiteren bevorzugten Ausführungsform der vorliegenden Erfindung wird das Verfahren so durchgeführt, dass jede zu verklebende Oberfläche der dünneren Schaumstoffplatten schäumhautfrei ist.

In einer weiteren Ausführungsform ist es bevorzugt, dass pro zu verklebendem Plattenpaar auf nur eine zu verklebende Oberfläche der dünneren Schaumstoffplatten das Gemisch enthaltend mindestens einen Klebstoff und mindestens ein Flammschutzmittel aufgebracht wird.

In einer Ausführungsform der vorliegenden Erfindung wird, sofern zusätzlich ein thermischer Verschweißungsschritt durchgeführt wird, mindestens eine dünnere Schaumstoffplatte, auf die zusätzlich ein Absorber von elektromagnetischer Strahlung aufgetragen wurde, durch die Bestrahlung mit elektromagnetischer Strahlung auf Temperaturen oberhalb der Glasübergangstemperatur der Schaumstoffplatte erhitzt.

Weiterhin ist es bevorzugt, dass in erfindungsgemäßen Verfahren ein Verpressen der zu verklebenden zusammengefügten dünnen Schaumstoffplatten durchgeführt wird. Das Verpressen erfolgt im Allgemeinen im Minutenbereich und/oder bei einem Pressdruck von 0,1 bis 0,5 bar.

Weiterhin ist es bevorzugt, dass in erfindungsgemäßen Verfahren ein Trocknungsschritt durchgeführt wird, nachdem das Gemisch enthaltend mindestens einen Klebstoff und mindestens ein Flammschutzmittel auf die Oberfläche der dünneren thermoplastischen Schaumstoffplatten aufgetragen wurde. Das Trocknen findet normalerweise für eine Dauer von 10 Minuten bis 2 Stunden und/oder bei einer Temperatur im Bereich von 50 bis 100 °C statt. Der Trocknungsschritt ist im erfindungsgemäßen Verfahren vorzugsweise nicht erforderlich, sofern als Klebstoff ein Schmelzkleber verwendet wird.

In einer weiteren bevorzugten Ausführungsform in der vorliegenden Erfindung umfasst das Verfahren die folgenden Schritte:
a) Bereitstellen von mindestens zwei dünneren Schaumstoffplatten, wobei jede zu verklebende Oberfläche der dünneren Schaumstoffplatten schäumhautfrei ist,
b) flächiges Aufbringen eines wässrigen Gemisches enthaltend mindestens einen Klebstoff und mindestens ein Flammschutzmittel auf (pro zu verklebendem Plattenpaar) mindestens eine zu verklebende Oberfläche der dünneren Schaumstoffplatten,
c) Trocknen der dünneren Schaumstoffplatten, die in Schritt b) erhalten wurden,
d) gegebenenfalls Aktivieren der getrockneten dünneren Schaumstoffplatten mit elektromagnetischer Strahlung,
e) Zusammenfügen der dünneren Schaumstoffplatten an den zu verklebenden Oberflächen,
f) Verpressen der zusammengefügten dünneren Schaumstoffplatten und gegebenenfalls anschließendes Aushärten unter Erhalt einer zumindest zweilagigen Schaumstoffplatte.

Das Aushärten im vorstehend beschriebenen Schritt f) wird vorzugsweise dann durchgeführt, sofern als Klebstoff ein Polyurethanklebstoff verwendet wird. Sofern in diesem Verfahren (in Schritt b)) ein Schmelzkleber eingesetzt wird, ist die Durchführung des Trocknungsschrittes c) nicht mehr erforderlich.

Ein weiterer Gegenstand der vorliegenden Erfindung sind die Schaumstoffplatten als solche, die zumindest zweilagig sind und nach dem vorstehend beschriebenen Verfahren herstellbar sind.
Nachfolgend wird die Erfindung anhand der Beispiele verdeutlicht.

Styrodur ist ein Handelsprodukt der BASF SE in Form eines extrudierten Polystyrol-Schaumstoffs (XPS). Die in den Beispielen verwendeten Platten weisen alle eine Dicke von 45 mm auf. Die Gew.-%-Angaben des Flammschutzmittels und des Graphits beziehen sich jeweils auf die Menge an eingesetztem Klebstoff.

### Erfindungsgemäße Beispiele

1) Eine wässrige Polyetherurethandispersion (Luphen D 259 U, BASF SE) wird mit 5 Gew.-% eines wässrigen Polyisocyanat-Härters (Basonat F 200 WD, BASF SE) und 5 Gew.-% Levagard DMPP (Dimethylpropylphosphonat Firma Lanxess) versetzt. Auf eine Styrodurplatte (100 x 100 mm²) ohne Schäumhaut wird so viel wässrige Kleberformulierung mit einem Pinsel aufgetragen, dass nach Trocknung 30 min bei 75 °C 80-120 g/m² trockener Kleber vorliegen. Die Kleberschicht wird unter einem IR-Strahler (IRE 380, OPTRON Messtechnik GmbH) 5 Sekunden erhitzt und eine zweite analoge Styrodurplatte ohne Schäumhaut aufgelegt und mit 2 kg für 60 Sekunden belastet.
   Der Verbund wird 5 Tage bei Raumtemperatur ausgehärtet.
   Die Haftzugfestigkeit (gemäß DIN EN 1607) beträgt 0,28 N/mm². Die Probe besteht den Brandtest B2 (nach DIN 4102).
2) Eine wässrige Haftklebstoff-Dispersion (Acronal V 212) wird mit 5 Gew.-% eines wässrigen Polyisocyanat-Härters (Basonat F 200 WD, BASF SE) und 5 Gew.-% Levagard DMPP versetzt. Auf eine Styrodurplatte (100 x 100 mm²) ohne Schäumhaut wird so viel wässrige Kleberformulierung mit einem Pinsel aufgetragen, dass nach Trocknung 30 min bei 75 °C 80-120 g/m² trockener Kleber vorliegen. Die Kleberschicht wird unter einem IR-Strahler (IRE 380, OPTRON Messtechnik GmbH) 5 Sekunden erhitzt und eine zweite analoge Styrodurplatte ohne Schäumhaut aufgelegt und mit 2 kg für 60 Sekunden bei 40 °C belastet.
   Der Verbund wird 5 Tage bei Raumtemperatur ausgehärtet.
   Die Haftzugfestigkeit analog DIN EN 1607 beträgt 0,18 N/mm². Die Probe besteht den Brandtest B2 (nach DIN 4102).
3) Auf eine 100 mm x 100 mm Styrodurplatte ohne Schäumhaut werden 6 g eines wässrigen Montageklebers (formuliert nach dem Beispiel aus EP 1 268 698) in dem 5 Gew.-% Levagard DMPP eingemischt wurden, mit einem Zahnspachtel Nr.777/Zahnungnr. A3 der Fa. Pajacito aufgetragen. Eine zweite analoge Styrodurplatte ohne Schäumhaut wird aufgelegt und mit 10 kg für 80 Sekunden belastet.
   Der Verbund wird 5 Tage bei Raumtemperatur ausgehärtet.
   Die Haftzugfestigkeit (Durchschnitt aus drei Mustern) analog DIN EN 1607 beträgt 0,28 N/mm². Die Probe besteht den Brandtest B2 (nach DIN 4102).
4) Auf eine 100 mm x 100 mm Styrodurplatte ohne Schäumhaut wird eine wässrige Polymerdispersion (Acronal S 790, BASF SE), die 7,5 Gew.-% Levagard DMPP enthält mit einem Pinsel aufgetragen (1,6-2,4 g) Eine zweite analoge Styrodurplatte ohne Schäumhaut wird aufgelegt und mit 10 kg für 80 Sekunden belastet.
   Der Verbund wird 5 Tage bei Raumtemperatur ausgehärtet.
   Die Haftzugfestigkeit (gemäß DIN EN 1607) beträgt 0,22 N/mm². Die Probe besteht den Brandtest B2 (nach DIN 4102).
5) Auf eine 100 mm x 100 mm Styrodurplatte ohne Schäumhaut werden 6 g eines wässrigen Montageklebers (formuliert nach dem Beispiel aus EP 1 268 698) in dem 3 Gew.-% Levagard DMPP und 5 Gew.-% Blähgraphit ES 350 F5 (Kropfmühl AG) eingemischt wurden, mit einem Zahnspachtel Nr.777/Zahnungnr. A3 der Fa. Pajacito aufgetragen. Eine zweite Platte ohne Schäumhaut wird aufgelegt und mit 10 kg für 80 Sekunden belastet.
   Der Verbund wird 5 Tage bei Raumtemperatur ausgehärtet.
   Die Haftzugfestigkeit (Durchschnitt aus drei Mustern) analog DIN EN 1607 beträgt 0,23 N/mm². Die Probe besteht den Brandtest B2 (nach DIN 4102).
6) Auf eine 100 mm x 100 mm Styrodurplatte ohne Schäumhaut wird eine wässrige Polymerdispersion (Acronal S 790, BASF SE), die 3 Gew. % Levagard DMPP und 7 Gew. % Blähgraphit ES 350 (Kropfmühl AG) enthält, mit einem Pinsel aufgetragen (1,6 - 2,4 g). Eine zweite analoge Styrodurplatte ohne Schäumhaut wird aufgelegt und mit 10 kg für 80 Sekunden belastet.
   Der Verbund wird 5 Tage bei Raumtemperatur ausgehärtet.
   Die Haftzugfestigkeit (gemäß DIN EN 1607) beträgt 0,21 N/mm². Die Probe besteht den Brandtest B2 (nach DIN 4102).
7) 50 g eines handelsüblichen Dämmstoffklebers (Polyurethanklebstoff Kleiberit Apripur 509) wird mit 5 g Blähgraphit und 45 g inertem Füllstoff (Kreide, Omyacarb ®5 GU) gefüllt.
   Auf eine 100 mm x 100 mm Styrodurplatte ohne Schäumhaut werden 2g des gefüllten Klebers, mit einem Zahnspachtel Nr.777/Zahnungnr. A3 der Fa. Pajacito aufgetragen. Die Schicht wird mit 20g/m² eines dünnen Wassernebels besprüht und eine zweite analoge Styrodurplatte ohne Schäumhaut wird aufgelegt und mit 10 kg für 90 Sekunden belastet.
   Der Verbund wird 5 Tage bei Raumtemperatur ausgehärtet.
   Die Haftzugfestigkeit (gemäß DIN EN 1607) beträgt 0,23 N/mm². Die Probe besteht den Brandtest B2 (nach DIN 4102).
   Vergleichsbeispiele
8) Eine wässrige Polyetherurethandispersion (Luphen D 259 U, BASF SE) wird mit 5 Gew.-% eines wässrigen Polyisocyanat-Härters (Basonat F 200 WD, BASF SE) und 2 Gew.-% Levagard DMPP versetzt. Auf eine Styrodurplatte (100 x 100 mm²) ohne Schäumhaut wird so viel wässrige Kleberformulierung mit einem Pinsel aufgetragen, dass nach Trocknung 30 min bei 75 °C 80-120 g/m² trockener Kleber vorliegen. Die Kleberschicht wird unter einem IR-Strahler (IRE 380, OPTRON Messtechnik GmbH) 5 Sekunden erhitzt und eine zweite analoge Styrodurplatte ohne Schäumhaut aufgelegt und mit 2 kg für 60 Sekunden belastet.
   Der Verbund wird 5 Tage bei Raumtemperatur ausgehärtet.
   Die Haftzugfestigkeit (gemäß DIN EN 1607) beträgt 0,29 N/mm². Die Probe besteht nicht den Brandtest B2 (nach DIN 4102).
9) Eine wässrige Haftklebstoff-Dispersion (Acronal V 212) wird mit 5 Gew. % eines wässrigen Polyisocyanat-Härters (Basonat F 200 WD, BASF SE) und 2,5 Gew.-% Levagard DMPP versetzt. Auf eine Styrodurplatte (100 x 100 mm²) ohne Schäumhaut wird so viel wässrige Kleberformulierung mit einem Pinsel aufgetragen, dass nach Trocknung 30 min bei 75 °C 80-120 g/m² trockener Kleber vorliegen. Die Kleberschicht wird unter einem IR-Strahler (IRE 380, OPTRON Messtechnik GmbH) 5 Sekunden erhitzt und eine zweite analoge Styrodurplatte ohne Schäumhaut aufgelegt und mit 2 kg für 60 Sekunden bei 40 °C belastet.
   Der Verbund wird 5 Tage bei Raumtemperatur ausgehärtet.
   Die Haftzugfestigkeit (gemäß DIN EN 1607) beträgt 0,17 N/mm². Die Probe besteht nicht den Brandtest B2 (nach DIN 4102).
10) Auf eine 100 mm x 100 mm Styrodurplatte ohne Schäumhaut werden 6 g eines wässrigen Montageklebers (formuliert nach dem Beispiel aus EP 1 268 698) in den 2,5 Gew.-% Levagard DMPP eingemischt wurden, mit einem Zahnspachtel Nr.777/Zahnungnr. A3 der Fa. Pajacito aufgetragen. Eine zweite Platte ohne Schäumhaut wird aufgelegt und mit 10 kg für 80 Sekunden belastet.
   Der Verbund wird 5 Tage bei Raumtemperatur ausgehärtet.
   Die Haftzugfestigkeit (Durchschnitt aus drei Mustern) gemäß DIN EN 1607 beträgt 0,25 N/mm². Die Probe besteht nicht den Brandtest B2 (nach DIN 4102).
11) Auf eine 100 mm x 100 mm Styrodurplatte ohne Schäumhaut wird eine wässrige Polymerdispersion (Acronal S 790, BASF SE), die 2,5 Gew.-% Levagard DMPP enthält, mit einem Pinsel aufgetragen (1,6 - 2,4 g) Eine zweite Platte ohne Schäumhaut wird aufgelegt und mit 10 kg für 80 Sekunden belastet.
   Der Verbund wird 5 Tage bei Raumtemperatur ausgehärtet.
   Die Haftzugfestigkeit analog DIN EN 1607 beträgt 0,20 N/mm². Die Probe besteht nicht den Brandtest B2 (nach DIN 4102).
12) Auf eine 100 mm x 100 mm Styrodurplatte ohne Schäumhaut werden 6 g eines wässrigen Montageklebers (formuliert nach dem Beispiel aus EP 1 268 698) in dem 2 Gew.-% Levagard DMPP und 3 Gew.-% Blähgraphit ES 350 F5 (Kropfmühl AG) eingemischt wurden, mit einem Zahnspachtel Nr.777/Zahnungnr. A3 der Fa. Pajacito aufgetragen. Eine zweite analoge Styrodurplatte ohne Schäumhaut wird aufgelegt und mit 10 kg für 80 Sekunden belastet.
   Der Verbund wird 5 Tage bei Raumtemperatur ausgehärtet.
   Die Haftzugfestigkeit (Durchschnitt aus drei Mustern) gemäß DIN EN 1607 beträgt 0,24 N/mm². Die Probe besteht den nicht Brandtest B2 (nach DIN 4102).
13) Auf eine 100 mm x 100 mm Styrodurplatte ohne Schäumhaut wird eine wässrige Polymerdispersion (Acronal S 790, BASF SE), die 3 Gew.-% Levagard DMPP und 2 Gew.-% Blähgraphit ES 350 (Kropfmühl AG) enthält, mit einem Pinsel aufgetragen (1,6 - 2,4 g) Eine zweite Platte ohne Schäumhaut wird aufgelegt und mit 10 kg für 80 Sekunden belastet.
   Der Verbund wird 5 Tage bei Raumtemperatur ausgehärtet.
   Die Haftzugfestigkeit (gemäß DIN EN 1607) beträgt 0,23 N/mm². Die Probe besteht nicht den Brandtest B2 (nach DIN 4102).
14) 50 g eines handelsüblichen Dämmstoffklebers (Polyurethanklebstoff Kleiberit Apripur 509) wird mit 50 g inertem Füllstoff (Kreide, Omyacarb® 5GU) gefüllt.
   Auf eine 100 mm x 100 mm Styrodurplatte ohne Schäumhaut werden 2g des gefüllten Klebers mit einem Zahnspachtel Nr.777/Zahnungnr. A3 der Fa. Pajacito aufgetragen. Die Schicht wird mit 20g/m² eines dünnen Wassernebels besprüht und eine zweite analoge Styrodurplatte ohne Schäumhaut wird aufgelegt und mit 10 kg für 90 Sekunden belastet.
   Der Verbund wird 5 Tage bei Raumtemperatur ausgehärtet.
   Die Haftzugfestigkeit (gemäß DIN EN 1607) beträgt 0,25 N/mm². Die Probe besteht nicht den Brandtest B2 (nach DIN 4102).

## Patentansprüche

1. Verfahren zur Herstellung von zumindest zweilagigen Schaumstoffplatten durch Verkleben von mindestens zwei dünneren Schaumstoffplatten zu der zumindest zweilagigen Schaumstoffplatte, **dadurch gekennzeichnet, dass** auf mindestens einer Oberfläche von mindestens einer dünneren Schaumstoffplatte ein Gemisch enthaltend mindestens einen Klebstoff und mindestens ein Flammschutzmittel aufgebracht wird, wobei in dem Gemisch
i) die Gesamtmenge an Flammschutzmittel 2: 4 Gew.-% (bezogen auf die Gesamtmenge an Klebstoff) beträgt, oder
ii) die Gesamtmenge an Flammschutzmittel ≥ 2,5 Gew.-% beträgt, sofern das Flammschutzmittel als Gemisch mit mindestens 2,5 Gew.-% Graphit eingesetzt wird (Mengenangaben jeweils bezogen auf die Gesamtmenge an Klebstoff).

2. Verfahren gemäß Anspruch 1, **dadurch gekennzeichnet, dass** das Flammschutzmittel ausgewählt ist aus einem Phosphat, einem Phosphit, einem Phosphonat, einem Polyphosphat, Melamin, einem Metallxidhydrat oder einer halogenierten organischen Verbindung.

3. Verfahren gemäß Anspruch 1 oder 2, **dadurch gekennzeichnet, dass** als Flammschutzmittel Dimethylpropylphosphonat (DMPP) und/oder als Graphit Blähgraphit eingesetzt wird.

4. Verfahren gemäß einem der Ansprüche 1 bis 3, **dadurch gekennzeichnet, dass** die dünnere Schaumstoffplatte ein Partikelschaumstoff oder ein Extrusionsschaumstoff ist, vorzugsweise ein Extrusionsschaumstoff von Polystyrol oder von einem aus Styrol hergestellten Copolymer.

5. Verfahren gemäß einem der Ansprüche 1 bis 4, **dadurch gekennzeichnet, dass** der Klebstoff ein Polyurethan klebstoff ist.

6. Verfahren gemäß einem der Ansprüche 1 bis 5, **dadurch gekennzeichnet, dass** der Klebstoff ein Schmelzklebstoff ist.

7. Verfahren gemäß einem der Ansprüche 1 bis 6, **dadurch gekennzeichnet, dass** die Gesamtmenge an Flammschutzmittel 4,5 bis 15 Gew.-% (bezogen auf die Gesamtmenge an Klebstoff) beträgt.

8. Verfahren gemäß einem der Ansprüche 1 bis 7, **dadurch gekennzeichnet, dass** das Gemisch enthaltend mindestens einen Klebstoff und mindestens ein Flammschutzmittel auf mindestens eine Oberfläche von mindestens einer dünneren Schaumstoffplatte aufgebracht wird, wobei die Oberfläche schäumhautfrei ist.

9. Verfahren einem der Ansprüche 1 bis 8, **dadurch gekennzeichnet, dass** jede zu verklebende Oberfläche der dünneren Schaumstoffplatte schäumhautfrei ist und/oder dass pro zu verklebendem Plattenpaar auf nur eine zu verklebende Oberfläche der dünneren Schaumstoffplatten das Gemisch enthaltend mindestens einen Klebstoff und mindestens ein Flammschutzmittel aufgebracht wird.

10. Verfahren gemäß einem der Ansprüche 1 bis 9 umfassend die folgenden Schritte
a) Bereitstellen von mindestens zwei dünneren Schaumstoffplatten, wobei jede zu verklebende Oberfläche der dünneren Schaumstoffplatten schäumhautfrei ist,
b) flächiges Aufbringen eines wässrigen Gemisches enthaltend mindestens einen Klebstoff und mindestens ein Flammschutzmittel auf (pro zu verklebendem Plattenpaar) mindestens eine zu verklebende Oberfläche der dünneren Schaumstoffplatten,
c) Trocknen der dünneren Schaumstoffplatten, die in Schritt b) erhalten wurden,
d) gegebenenfalls Aktivieren der getrockneten dünneren Schaumstoffplatten mit elektromagnetischer Strahlung,
e) Zusammenfügen der dünneren Schaumstoffplatten an den zu verklebenden Oberflächen,
f) Verpressen der zusammengefügten dünneren Schaumstoffplatten und gegebenenfalls anschließendes Aushärten unter Erhalt einer zumindest zweilagigen Schaumstoffplatte.

11. Schaumstoffplatte, die zumindest zweilagig ist, herstellbar nach einem Verfahren gemäß einem der Ansprüche 1 bis 10.
